# EUROPEAN PATENT APPLICATION

(11) **EP 4 385 731 A2**
(43) Date of publication of application: **19.06.2024**
(21) Application number: 24173853.3
(22) Date of filing: 25.10.2021
(51) Int. Cl.: B32B 27/28

(54) **FIBRE METAL LAMINATE PART, AIRCRAFT HAVING A FIBRE METAL LAMINATE PART, AND METHOD FOR MANUFACTURING A FIBRE METAL LAMINATE PART**

(62) Divisional of application: 21204523.1
(71) Applicant: Airbus SAS, 31700 Blagnac Cedex (FR)
(72) Inventor: FIETZEK, Heiko, 82024 Taufkirchen (DE); LENCZOWSKI, Blanka, 82024 Taufkirchen (DE)
(74) Representative: Isarpatent

(57) **Abstract**

A method for manufacturing a fibre metal laminate part includes placing multiple metal sheets and fibre reinforced plastic plies above one another, the metal sheets being made of AlMgSc alloy and the fibre reinforced plastic plies comprising a thermoplastic matrix material and the fibre reinforced plastic plies including carbon nano tubes and/or graphene, heating the metal sheets and the fibre reinforced plastic plies to temperature in a first temperature range to transfer the thermoplastic matrix material of the fibre reinforced plastic plies to a viscous state, pressing together the heated metal sheets and fibre reinforced plastic plies, and at least partially solidifying the thermoplastic matrix material of the fibre reinforced plastic plies by applying a temperature in a second temperature range to the metal sheets and the fibre reinforced plastic plies.

## Description

### FIELD OF THE INVENTION

The present invention pertains to a fibre metal laminate part, an aircraft having a fibre metal laminate part, and a method for manufacturing a fibre metal laminate part.

### BACKGROUND OF THE INVENTION

Fibre metal laminates (FML) typically comprise a plurality of metal sheets and a plurality of fibre reinforced plastic (FRP) plies arranged alternately and laminated together. For manufacturing FML parts, the metal sheets and the FRP plies are placed alternately above one another. Further, a pressing tool is used to press together the FRP plies and the metal sheets and to form them into the desired shape. Pressing and forming is performed under the influence of heat to cure a thermoset matrix material of the FRP plies or to melt and consolidate a thermoplastic matrix material of the FRP plies.

US 2018/0162103 A1 discloses a stiffening element formed by an FLM part which includes an aluminium alloy metal sheet and a fibre reinforce thermoplastic material.

When combining aluminium alloy metal sheets and FRP plies that include thermoplastic matrix material in an FML part, it is difficult to receive a mechanically stable part that is still able to withstand elevated temperatures, e.g. temperatures at the in-service temperature range of airplanes.

### SUMMARY OF THE INVENTION

It is one of the objects of the invention to provide improved solutions for fibre metal laminate (FML) parts.

To this end, the present invention provides a method for manufacturing a fibre metal laminate part in accordance with claim 1, a fibre metal laminate part in accordance with claim 13, and an aircraft in accordance with claim 14.

According to a first aspect of the invention, a method for manufacturing a fibre metal laminate part (FML) includes placing multiple metal sheets and fibre reinforced plastic plies above one another, the metal sheets being made of AlMgSc alloy and the fibre reinforced plastic plies comprising a thermoplastic matrix material and the fibre reinforced plastic plies including carbon nano tubes and/or graphene, heating the metal sheets and the fibre reinforced plastic plies to temperature in a first temperature range to transfer the thermoplastic matrix material of the fibre reinforced plastic plies to a viscous state, pressing together the heated metal sheets and fibre reinforced plastic plies, and solidifying the thermoplastic matrix material of the fibre reinforced plastic plies by applying a temperature in a second temperature range to the metal sheets and the fibre reinforced plastic plies.

According to a second aspect of the invention, a fibre metal laminate part (FML) comprises multiple metal sheets made of AlMgSc alloy, and multiple fibre reinforced plastic plies comprising a thermoplastic matrix material and including carbon nano tubes and/or graphene, wherein the metal sheets and the fibre reinforced plastic plies are arranged alternately above one another and bonded together. The FML part according to this aspect of the invention, for example, may be manufactured using the method of the first aspect of the invention.

According to a third aspect of the invention, an aircraft comprises a fibre metal laminate part according to the second aspect of the invention. The FML part, for example, may form part of a wing, of a fuselage, or of a stabilizer of the aircraft.

It is one of the ideas of the present invention to combine AlMgSc aluminium alloy and a fibre reinforced thermoplastic material in a FML part. AlMgSc aluminium alloy, e.g. in the form of aluminium alloy 5024 or 5028, provides the benefit of high mechanical strength even when being formed or treated at high temperatures. In particular, AlMgSc aluminium alloy is able to keep its high mechanical strength also after a deformation process at high temperatures. Thus, it can advantageously be combined with a fibre reinforced plastic ply that includes a high temperature resistant thermoplastic matrix material embedding the fibres. Thereby, FML parts of high mechanical strength and high temperature resistance can be achieved in a simple manufacturing process that includes a step of placing the metal sheets and the fibre reinforce plastic (FRP) plies above one another and a consolidation process. In the consolidation process, the FRP plies and metal sheets are pressed together while heat is applied to soften the thermoplastic matrix material of the FRP plies. The consolidation process further includes at least partially solidifying the thermoplastic matrix materials of the FRP plies while the FRP plies and the metal sheets are pressed together and bond the FRP plies with the metal sheets.

Solidifying is achieved by reducing the temperature of the metal sheets and the FRP plies at least partially below a melting temperature, i.e. a glass transition temperature of the thermoplastic matrix material.

The FML parts, according to the invention, combine AlMgSc alloy metal sheets and FRP plies having a thermoplastic matrix material, in particular, a high temperature resistant thermoplastic matrix material. Thereby, FML parts of excellent mechanical strength and temperature stability are achieved, which are able to reliably withstand the in service temperatures in an aircraft, e.g. temperatures of at least 120°C.

According to some embodiments, the first temperature range includes temperatures between 170°C and 400°C. It has been found that excellent bonding between the FRP plies and the metal sheets in this temperature range for a plurality of candidates of thermoplastic matrix material.

According to some embodiments, the first temperature range includes temperatures between 175°C and 350°C. In this temperature range, beside achieving good mechanical strength of the bonding between the FRP plies and the metal sheets, it has been found that the metal sheets keep a higher mechanical strength.

According to some embodiments, the second temperature range includes temperatures between 0°C and 160°C, in particular, temperatures between 5°C and 50°C, preferably between 10°C and 35°C.

According to some embodiments, pressing is performed with a pressure in a range between 0.1 and 20 bar.

According to some embodiments, pressing includes forming the metal sheets and the fibre reinforced plastic plies to a three dimensional shape. For example, the FRP plies and the metal sheets may be press formed from a substantially even or flat shape to another, different shape during application of heat. Thereby, a quick and efficient process of generating the FML part directly with its desired shape is achieved.

According to other embodiments, the metal sheets and the fibre reinforced plastic plies are heated, pressed and solidified as flat or even sheets, and, in further, subsequent steps, the metal sheets and the solidified fibre reinforced plastic plies are re-heated and formed to a three dimensional shape. That is, it may be provided that a flat or plate shaped FML part is manufactured first and, after having finished the consolidation process, the plate shaped FML part is deformed to its desired shape. The latter step can be done, for example, in a separate tool or even in a separate facility after shipping of the plate shaped FML parts. Since the thermoplastic matrix material in combination with the AlMgSc alloy allows for multiple heating, solidification, and deformation without substantially loosing mechanical strength, a more efficient, work-sharing manufacturing process can be realized. In particular, the flat or even FML parts can be produced much quicker, i.e. with shorter consolidation times which may, for example, lie in a range between 10 to 60 minutes.

According to some embodiments, forming the metal sheets and the fibre reinforced plastic plies to a three dimensional shape includes forming one or more of the following geometries at least in a predefined region of the metal sheets and the fibre reinforced plastic plies: a curved geometry, a stepped geometry, a flat or even geometry.

According to some embodiments, pressing may be performed in a pressing tool, e.g. in a hydraulic or mechanical hot pressing tool, in a heated roll press, or similar. According to some embodiments, pressing may also be done inside an autoclave in the form of vacuum assisted pressing. The FRP plies and the metal sheets placed above one another, for example, may be placed in a vacuum bag in an oven, on a heating plate, or may be heated by radiation, e.g. by infrared radiation or micro wave radiation.

According to some embodiments, the thermoplastic matrix material is one of the following materials: polyphenylene sulfide (PPS), polyimide (PI), a polyaryletherketone including at least one of polyetherketoneketone (PEEK) and polyetherketone (PEK).

According to some embodiments, the fibre reinforced plastic plies include one or more of the following: carbon fibres, glass fibres, ceramic fibres.

According to some embodiments, the fibres are embedded in the matrix material as continuous fibre bundles or as chopped fibres.

According to some embodiments, the method may further include generating a surface texture on the metal sheets, in particular, by at least one of laser structuring, surface cleaning, and anodizing. Generally, a surface texture may be generate at least at those surfaces of the metal sheets that are to be contacted and bonded with the FRP plies. The texture, for example, may form a surface topography that includes peaks or elevations that can extend or penetrate into the matrix material of the FRP plies and valleys or recesses that can be filled with the matrix material of the FRP plies. Generating the surface texture further improves the bonding between the metal sheets and the FRP plies.

The features and advantages disclosed herein for one aspect of the invention are also disclose for the other aspect of the invention.

### BRIEF DESCIRPTION OF THE DRAWINGS

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding or similar parts.
Fig. 1 schematically illustrates a fibre metal laminate part according to an embodiment of the invention.
Fig. 2 schematically illustrates a fibre metal laminate part according to a further embodiment of the invention.
Fig. 3 schematically illustrates a flow diagram of a method for manufacturing a fibre metal laminate part according to an embodiment of the invention.
Fig. 4 schematically illustrates an aircraft according to an embodiment of the invention.

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings.

### DETAILED DESCRIPTION OF EMBODIMENTS

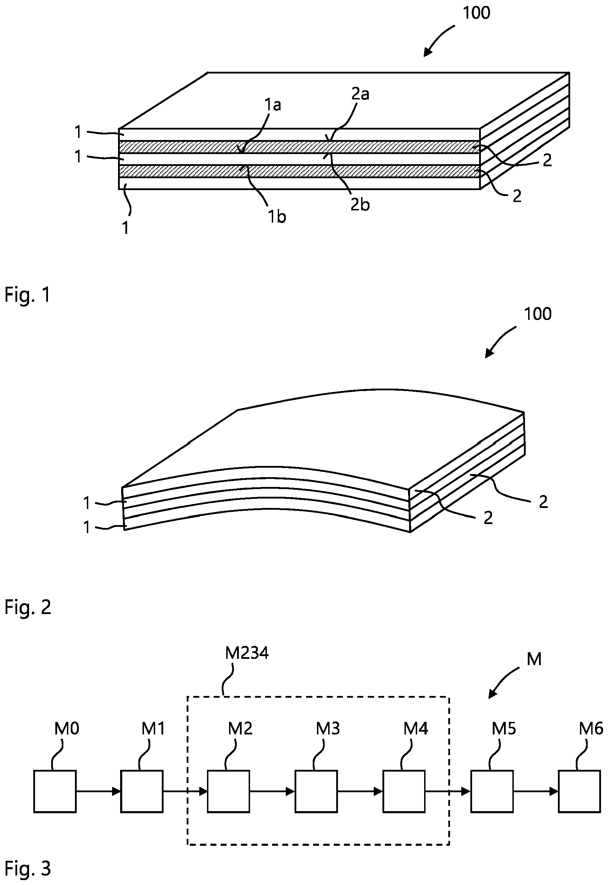

Fig. 1 exemplarily shows a fibre metal laminate (FML) part 100. As is schematically shown in Fig. 1, the FML part includes multiple metal sheets 1 multiple fibre reinforced plastic (FRP) plies 2.

The metal sheets 1 are made of AlMgSc alloy, e.g. in the form of AA5024 or AA5028. AlMgSc alloy provides the benefit of a very finely granulated crystalline structure. Therefore, it has excellent hot forming properties. That is, the metal sheets 1 can be plastically deformed at high temperatures without substantially loosing mechanical strength. As exemplarily shown in Fig. 1, the metal sheets 1, generally, have a first surface 1a and an opposite second surface 1b defining a thickness or cross-section therebetween. The thickness of the metal sheets 1 may, for example, be in a range between 0.5 mm and 15 mm. Generally, the metal sheets 1 have an areal expanse and may, for example, be rectangular sheets as shown in Fig. 1. However, the invention is not limited to this shape, of course.

The FRP plies 2 include fibres that are embedded in a matrix material. The matrix material is or comprises a thermoplastic matrix material. For example, the matrix material may be made of polyphenylene sulphide (PPS), polyimide (PI), or a polyaryletherketone including at least one of polyetherketoneketone (PEEK) and polyetherketone (PEK). The fibres may be embedded in the matrix material as longitudinally extending, continuous fibre bundles or as chopped fibres. For example, carbon fibres, glass fibres, ceramic fibres, carbon nano tubes, graphene or a combination of these fibres may be present in the FRP plies 2. The FRP plies 2 may have a first surface 2a and an opposite second surface 2b defining a thickness or cross-section therebetween. The thickness of the FRP plies may be within a range between 0.2 mm and 15 mm, for example.

As is schematically shown in Fig. 1, the metal sheets 1 and FRP plies 2 are arranged alternately above one another or stacked so that the first and second surfaces 1a, 1b, 2a, 2b of adjacent metal sheets 1 and FRP plies 2 contact each other. The metal sheets 1 and the FRP plies 2 are bonded together by aid of the matrix material of the FRP plies 2.

In Fig. 1, it is exemplarily shown that the FML part 100 has the shape of a flat or even plate. However, the invention is not limited thereto. Generally, the FML part 100 may have any desired three dimensional shape, including, at least in a predefined region of FML, a curved geometry, a stepped geometry, a flat or even geometry, or combinations thereof. For example, Fig. 2 shows an FML part 100 having a curved geometry.

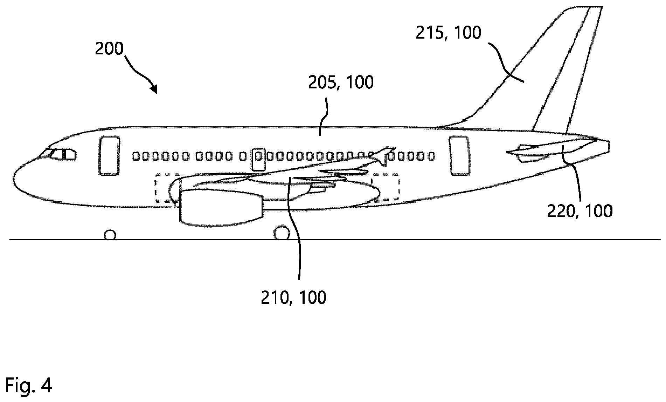

Fig. 4 exemplarily shows an aircraft 200 comprising a fuselage 205, wings 210 extending from the fuselage 205, a vertical stabilizer 215 extending from a rear end region of the fuselage 205, and horizontal stabilizers 220 also extending from the rear end region of the fuselage 205. The aircraft 200 comprises an FML part 100 as described above. For example, the FML part 100 may form a part of the fuselage 205, e.g. a skin, a stringer, a frame or similar, a part of the wing 210, or a part of the stabilizers 215, 220.

Fig. 3 shows a flowchart of a method M for manufacturing an FML part 100. The method M will be explained by referring to the FML part 100 discussed above by reference to Figs. 1 and 2.

In an optional, preparatory step M0, a surface texture may be generated on the metal sheets 1. In this step M0, the first and/or the second surfaces 1a, 1b of the metal sheets 1 are treated so that the surface(s) 1a, 1b form a topography with valleys or recesses and elevations or peaks. For example, the texture may be generated by laser structuring, surface cleaning, anodizing or a combination thereof.

In step M1 the metal sheets 1 and FRP plies 2 are placed above one another so that the first and second surfaces 1a, 1b, 2a, 2b of adjacent metal sheets 1 and FRP plies 2 contact each other. The FRP plies 2 may be provided in step M1 as pre-preg plies, in which the fibres are pre-impregnated with the thermoplastic matrix material. For example, one FRP ply 2 may include multiple pre-preg plies placed above one another. The combination metal sheets 1 and FRP plies 2 placed above one another, in the following, is also referred to FML semi-finished product.

In step M2, the metal sheets 1 and the fibre reinforced plastic plies 2 are heated to temperature in a first temperature range to transfer the thermoplastic matrix material of the FRP plies 2 to a viscous or softened state. The first temperature range includes temperatures equal to or above the glass transition temperature of the thermoplastic matrix material. For example, the first temperature range may include temperatures between 170°C and 400°C, in particular between 175°C and 350°C.

In step M3, the heated metal sheets 1 and FRP plies 2 are pressed together, for example, with a pressure in a range between 0.1 and 20 bar. It should be noted that step M2 and M3 are performed at least partially or completely overlapping. That is, heat and pressure are applied simultaneously. By applying heat, the thermoplastic matrix material is softened and gets viscous or is at least partially melted. Due to the applied pressure, the softened matrix material is urged in tight contact with the respective surface 1a, 1b of the respective adjacent metal sheet 1 and fills the existing surface recesses that may exist per se or that have been formed in optional step M0.

In step M4, the thermoplastic matrix material of the FRP plies 2 is at least partially or completely solified by applying a temperature in a second temperature range to the metal sheets 1 and the FRP plies 2. The second temperature range includes temperatures below the glass transition temperature of the thermoplastic matrix material. For example, the second temperature range may include temperatures between 0°C and 160°C, in particular, between 5°C and 50°C, and further optional between 10°C and 35°C. It should be noted that step M4 also is at least partially preformed simultaneously to step M2. That is, after having heated the FML semi-finished product to a temperature in the first temperature range while applying pressure at the same time, the FML semi-finished product is cooled down to a temperature in the second temperature range while the FML semi-finished product is still applied with a predefined pressure for at least part of the cooling process.

The steps M2, M3, and M4 form a consolidation process M234. The consolidation process M234 as a whole or at least heating M2 and pressing M3, may be performed, for example, in a pressing tool, e.g. in a hydraulic or mechanical hot pressing tool, in a heated roll press, or similar. Alternatively, the consolidation process M234 or at least heating M2 and/or pressing M3 may also be done inside an autoclave. In this case, pressing M2 may include vacuum assisted pressing. The FML semi-finished product, therefore, may be placed in a vacuum bag in an oven, on a heating plate, or may be heated by radiation, e.g. by infrared radiation or micro wave radiation.

Optionally, the metal sheets 1 and the FRP plies 2 may be formed to a three dimensional shape during the consolidation process. For example, the FML semi-finished product may be deformed from a substantially even or flat shape into the shape shown in Fig. 2 or so as to include another three dimensional geometry at least in a predefined region, such as a curved geometry, a stepped geometry, or a flat or even geometry or combinations thereof. This not only includes deforming the FML semi-finished product from a flat shape to another shape but also includes forming the FRP plies 2 and the metal sheets 1 into the desired shapes in separate processes and placing the preformed FRP plies 2 and the metal sheets 1 above one another in step M1.

Alternatively, the metal sheets 1 and the FRP plies 2 may be subjected to the consolidation process M234 as flat or even sheets so that an FML part 100 as shown in Fig. 1 is formed. Afterwards, a step M5 of re-heating M5 the metal sheets 1 and the solidified FRP plies 2, and a step M6 of forming the metal sheets 1 and the FRP plies 2 to the a three dimensional shape may be performed.

Since AlMgSc alloy metal sheets 1 are combined with fibre plies 2 including a high temperature resistant thermoplastic matrix material, highly temperature resistant and mechanically stable FML parts 100 are achieved. These FML parts 100 can be obtained in a simple manufacturing process M as described above. In particular, the hot forming properties of AlMgSc alloy ease manufacturing of the FML parts 100 because the FML parts 100, although being subject to high temperatures for softening the thermoplastic matrix material, do not substantially loose mechanical strength.

Although specific embodiments have been illustrated and described herein, it will be appreciated by those of ordinary skill in the art that a variety of alternate and/or equivalent implementations may be substituted for the specific embodiments shown and described without departing from the scope of the present invention as defined by the appended claims.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification. In particular, the embodiments and configurations described for the seat modules and aircraft infrastructure can be applied accordingly to the aircraft or spacecraft according to the invention and the method according to the invention, and vice versa.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

In particular, the following further embodiments are disclosed herein:
Embodiment E1: A method (M) for manufacturing a fibre metal laminate part (100), comprising:
   placing (M1) multiple metal sheets (1) and fibre reinforced plastic plies (2) above one another, the metal sheets (1) being made of AlMgSc alloy and the fibre reinforced plastic plies (2) comprising a thermoplastic matrix material;
   heating (M2) the metal sheets (1) and the fibre reinforced plastic plies (2) to temperature in a first temperature range to transfer the thermoplastic matrix material of the fibre reinforced plastic plies (2) to a viscous state;
   pressing (M3) together the heated metal sheets (1) and fibre reinforced plastic plies (2); and
   at least partially solidifying (M4) the thermoplastic matrix material of the fibre reinforced plastic plies (2) by applying a temperature in a second temperature range to the metal sheets (1) and the fibre reinforced plastic plies (2).
Embodiment E2: The method (M) according to embodiment E1, wherein the first temperature range includes temperatures between 170°C and 400°C.
Embodiment E3: The method (M) according to embodiment E2, wherein the first temperature range includes temperatures between 175°C and 350°C.
Embodiment E4: The method (M) according to any one of the preceding embodiments E1 to E3, wherein the second temperature range includes temperatures between 0°C and 160°C.
Embodiment E5: The method (M) according to any one of the preceding embodiments E1 to E4, wherein pressing (M3) is performed with a pressure in a range between 0.1 and 20 bar.
Embodiment E6: The method (M) according to any one of the preceding embodiments E1 to E5, wherein pressing (M3) includes forming the metal sheets (1) and the fibre reinforced plastic plies (2) to a three dimensional shape.
Embodiment E7: The method (M) according to any one of the embodiments E1 to E5, wherein the metal sheets (1) and the fibre reinforced plastic plies (2) are heated (M2), pressed (M3) and solidified (M4) as flat or even sheets, and wherein the method further includes re-heating (M5) the metal sheets (1) and the solidified fibre reinforced plastic plies (2) and forming the metal sheets (1) and the fibre reinforced plastic plies (2) to a three dimensional shape.
Embodiment E8: The method (M) according to embodiment E6 or E7, wherein forming the metal sheets (1) and the fibre reinforced plastic plies (2) to a three dimensional shape includes forming one or more of the following geometries at least in a predefined region of the metal sheets (1) and the fibre reinforced plastic plies (2): a curved geometry, a stepped geometry, a flat or even geometry.
Embodiment E9: The method (M) according to any one of the preceding embodiments E1 to E8, wherein the thermoplastic matrix material is one of the following materials: polyphenylene sulfide, polyimide, a polyaryletherketone including at least one of polyetherketoneketone and polyetherketone.
Embodiment E10: The method (M) according to any one of the preceding embodiments E1 to E9, wherein the fibre reinforced plastic plies (2) include one or more of the following: carbon fibres, glass fibres, ceramic fibres, carbon nano tubes, graphene.
Embodiment E11: The method (M) according to embodiment E10, wherein the fibres are embedded in the matrix material as continuous fibre bundles or as chopped fibres.
Embodiment E12: The method (M) according to any one of the preceding embodiments E1 to E11, further including:
   generating (M0) a surface texture on the metal sheets (1), in particular, by at least one of laser structuring, surface cleaning, and anodizing.
Embodiment E13: A fibre metal laminate part (100), for example, formed by a method (M) according to any one of the preceding embodiments E1 to E12, comprising:
   multiple metal sheets (1) made of AlMgSc alloy; and
   multiple fibre reinforced plastic plies (2) comprising a thermoplastic matrix material;
   wherein the metal sheets (1) and the fibre reinforced plastic plies (2) are arranged alternately above one another and bonded together.
Embodiment E14: An aircraft (200) comprising a fibre metal laminate part (100) according to embodiment E13.

### List of reference signs

- 1: metal sheet
- 1a: first surface of metal sheet
- 1b: second surface of metal sheet
- 2: fibre reinforced plastic ply
- 2a: first surface of fibre reinforced plastic ply
- 2b: second surface of fibre reinforced plastic ply

- 100: fibre metal laminate part
- 200: aircraft
- 205: fuselage
- 210: wing
- 215: vertical stabilizer
- 220: horizontal stabilizer

- M: method
- M0-M6: method steps
- M234: consolidation process

## Claims

1. A method (M) for manufacturing a fibre metal laminate part (100), comprising:
placing (M1) multiple metal sheets (1) and fibre reinforced plastic plies (2) above one another, the metal sheets (1) being made of AlMgSc alloy and the fibre reinforced plastic plies (2) comprising a thermoplastic matrix material, the fibre reinforced plastic plies (2) including carbon nano tubes and/or graphene;
heating (M2) the metal sheets (1) and the fibre reinforced plastic plies (2) to temperature in a first temperature range to transfer the thermoplastic matrix material of the fibre reinforced plastic plies (2) to a viscous state;
pressing (M3) together the heated metal sheets (1) and fibre reinforced plastic plies (2); and
at least partially solidifying (M4) the thermoplastic matrix material of the fibre reinforced plastic plies (2) by applying a temperature in a second temperature range to the metal sheets (1) and the fibre reinforced plastic plies (2).

2. The method (M) according to claim 1, wherein the first temperature range includes temperatures between 170°C and 400°C.

3. The method (M) according to claim 2, wherein the first temperature range includes temperatures between 175°C and 350°C.

4. The method (M) according to any one of the preceding claims, wherein the second temperature range includes temperatures between 0°C and 160°C.

5. The method (M) according to any one of the preceding claims, wherein pressing (M3) is performed with a pressure in a range between 0.1 and 20 bar.

6. The method (M) according to any one of the preceding claims, wherein pressing (M3) includes forming the metal sheets (1) and the fibre reinforced plastic plies (2) to a three dimensional shape.

7. The method (M) according to any one of the claims 1 to 5, wherein the metal sheets (1) and the fibre reinforced plastic plies (2) are heated (M2), pressed (M3) and solidified (M4) as flat or even sheets, and wherein the method further includes re-heating (M5) the metal sheets (1) and the solidified fibre reinforced plastic plies (2) and forming the metal sheets (1) and the fibre reinforced plastic plies (2) to a three dimensional shape.

8. The method (M) according to claim 6 or 7,wherein forming the metal sheets (1) and the fibre reinforced plastic plies (2) to a three dimensional shape includes forming one or more of the following geometries at least in a predefined region of the metal sheets (1) and the fibre reinforced plastic plies (2): a curved geometry, a stepped geometry, a flat or even geometry.

9. The method (M) according to any one of the preceding claims, wherein the thermoplastic matrix material is one of the following materials:
polyphenylene sulfide, polyimide, a polyaryletherketone including at least one of polyetherketoneketone and polyetherketone.

10. The method (M) according to any one of the preceding claims, wherein the fibre reinforced plastic plies (2) further include one or more of the following: carbon fibres, glass fibres, ceramic fibres.

11. The method (M) according to claim 10, wherein the fibres are embedded in the matrix material as continuous fibre bundles or as chopped fibres.

12. The method (M) according to any one of the preceding claims, further including:
generating (M0) a surface texture on the metal sheets (1), in particular, by at least one of laser structuring, surface cleaning, and anodizing.

13. A fibre metal laminate part (100), for example, formed by a method (M) according to any one of the preceding claims, comprising:
multiple metal sheets (1) made of AlMgSc alloy; and
multiple fibre reinforced plastic plies (2) comprising a thermoplastic matrix material and including carbon nano tubes and/or graphene;
wherein the metal sheets (1) and the fibre reinforced plastic plies (2) are arranged alternately above one another and bonded together.

14. An aircraft (200) comprising a fibre metal laminate part (100) according to claim 13.
